Europäisches Patentamt

European Patent Office

Office européen des brevets

(19)

(11) Veröffentlichungsnummer: **0 202 585**
A2

(12) # EUROPÄISCHE PATENTANMELDUNG

(21) Anmeldenummer: 86106509.2

(22) Anmeldetag: 13.05.86

(51) Int. Cl.⁴: **G 01 J 3/433**

(30) Priorität: 21.05.85 DE 3518156

(43) Veröffentlichungstag der Anmeldung:
26.11.86 Patentblatt 86/48

(84) Benannte Vertragsstaaten:
CH FR GB IT LI

(71) Anmelder: Hellige GmbH
Postfach 728 Heinrich-von-Stephan-Strasse 4
D-7800 Freiburg im Breisgau(DE)

(72) Erfinder: Schmidtke, Gerhard, Dr.
Gilgenmatten 38
D-7800 Freiburg(DE)

(72) Erfinder: Hindelang, Fritz, Dr.
Kapellenweg 1
D-8017 Ebersberg(DE)

(74) Vertreter: Patentanwälte TER MEER - MÜLLER -
STEINMEISTER
Mauerkircherstrasse 45
D-8000 München 80(DE)

(54) Derivativ-Spektrometer.

(57) Bei einem Derivativ-Spektrometer mit einer Strahlungsquelle (1), einer Meßprobenzelle (4), einem Detektor (6), einer
Verstärkeranordnung (7, 8) und einer Signalauswerteeinrichtung (10) erfolgt ein Wobbeln der Wellenlänge des die
Meßprobenzelle (4) durchquerenden Lichtes mit Hilfe eines
taumelnd rotierenden Interferenzfilters (11).

Fig.1

EP 0 202 585 A2

- 1 -

## Derivativ-Spektrometer

Die Erfindung betrifft ein Derivativ-Spektrometer zum hochempfindlichen qualitativen und quantitativen spektroskopischen Nachweis von Substanzen mit einer Strahlungsquelle, deren Strahlung über einen Monochromator und Wellenlängenwobbler nach Durchqueren einer Meßprobenzelle auf einen Detektor gelangt, der den Eingang eines auf die doppelte Wobblermodulationsfrequenz abgestimmten Verstärkers speist, dessen Ausgangssignal mit einer Signalauswerteeinrichtung verbunden ist.

Ein derartiges Derivativ-Spektrometer ist aus dem Aufsatz "Derivativ-Spektroskopie in der Gasanalyse, Technisches Messen atm, Heft 11, 1976, Seite 331 bis 335" bekannt und verwendet gemäß der Technik der Derivativ-Spektrometer eine Wellenlängenmodulation, wobei die Wellenlänge der Strahlung, die durch die Meßprobenzelle hindurchgeht, sinusförmig mit der Zeit variiert wird. Die Modulationsamplitude wird dabei optimal auf die Breite der zu analysierenden Spektrallinie eingestellt. Im Bereich einer Spektrallinie erzeugt die Modulation der primären Wellenlänge eine Intensitätsmodulation der vom Detektor empfangenen Strahlung. Bei dem bekannten Derivativ-Spektrometer wird das Licht einer Strahlungsquelle mit einem Gittermonochromator zerlegt, so daß monochromatisches Licht in die Meßprobenzelle eintritt. Die Wellenlänge wird sinusförmig durch Lateralbewegung des Eingangsschlitzes des Monochromators variiert. Diese Lateralbewegung erfolgt elektromechanisch mit einer Sinusfunktion von 45 Hz und einer Amplitude in der Größenordnung 1 mm. Eine solche Anordnung hat jedoch neben dem Nachteil, daß die Lichtstärke wegen der geringen Spaltbreite begrenzt ist, den Nachteil, daß der Lichtweg sich durch die Modulationsbewegung des Spaltes verändert. Außerdem erzeugt die Lateralbewegung des Spaltes störende Wechselbeschleunigungen, woraus Vibrationen resultieren.

Ausgehend von diesem Stand der Technik liegt der Erfindung die Aufgabe zugrunde, ein lichtstarkes, robustes und einfach aufgebautes Derivativ-Spektrometer mit festem Strahlengang zu schaffen, das sich insbesondere auch für den Einsatz in Verbindung mit faseroptischen Sensoren eignet.

Diese Aufgabe wird erfindungsgemäß dadurch gelöst, daß der Monochromator und der Wellenlängenwobbler durch ein um eine schräg zum Strahlengang angestellte Rotationsachse rotierendes Interferenzfilter gebildet sind, das gegenüber der Rotationsachse gekippt angeordnet ist und dadurch im Strahlengang eine Taumelbewegung ausführt.

Infolge der Taumelbewegungen ist der Einfallswinkel der Strahlung auf das Interferenzfilter eine Funktion der Zeit, wobei die Erfindung in neuartiger Weise die an sich bekannte Abhängigkeit der Wellenlänge vom Einfallswinkel der Strahlung auf ein Interferenzfilter ausnutzt. Die Modulation mit Hilfe des Interferenzfilters vermeidet einerseits die Intensitätsverluste eines Eintritts- und Austrittsspalte aufweisenden Monochromators und die mechanischen Vibrationen eines oszillierenden Eingangsschlitzes.

Bei einem bevorzugten Ausführungsbeispiel der Erfindung ist das Interferenzfilter in einem kreiselartigen Ring eines Außenläuferantriebs gekippt angeordnet.

Zweckmäßige Ausgestaltungen und Weiterbildungen der Erfindung sind Gegenstand von Unteransprüchen.

Nachstehend wird die Erfindung anhand der in der Zeichnung dargestellten Ausführungsbeispiele näher erläutert. Es zeigen:

Fig. 1    ein erstes Ausführungsbeispiel der Erfindung mit einem auf einer Motorwelle schräg befestigten Interferenzfilter und

Fig. 2    ein zweites Ausführungsbeispiel der Erfindung mit einem in einem Kreiselring gekippt angeordneten Interferenzfilter.

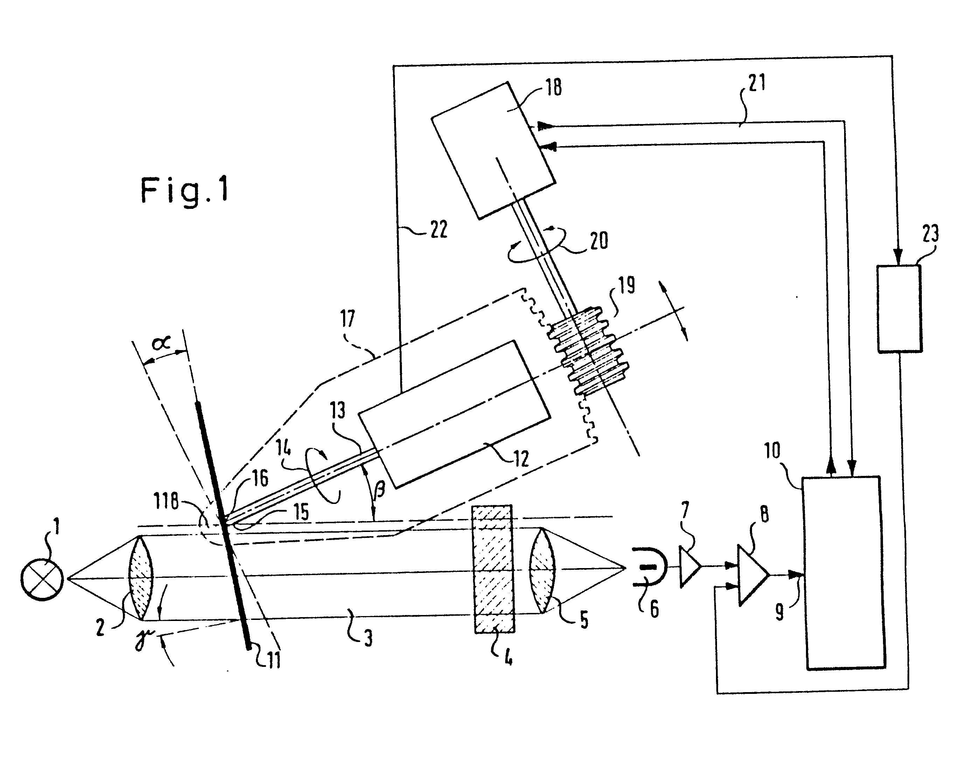

Bei dem in Fig. 1 dargestellten Ausführungsbeispiel eines Derivativ-Spektrometers ist eine Halogenlampe 1 als breitbandige Lichtquelle vorgesehen, deren Strahlung über eine erste Linse 2 kollimiert wird und als paralleles Lichtstrahlbündel 3 eine Meßprobenzelle 4 durchstrahlt. Das Lichtstrahlbündel 3 wird schließlich durch eine zweite Linse 5 auf einen lichtempfindlichen Detektor 6 abgebildet, dessen Ausgangssignal in einem Vorverstärker 7 verstärkt wird und anschließend über einen Lock-In-Verstärker 8 zum Eingang 9 einer Signalauswerteeinrichtung 10 gelangt.

In den Strahlengang zwischen der ersten Linse 2 und der Meßprobenzelle 4 taucht ein kreisscheibenförmiges Interferenzfilter 11 ein, dessen spektraler Durchlaßbereich vom Einfallswinkel gamma abhängt. Je nach der Schrägstellung des Interferenzfilters 11 gegenüber dem parallelen Lichtstrahlbündel 3 gelangt somit ein anderer spektraler Ausschnitt der ursprünglich breitbandigen Strahlung der Halogenlampe 1 zum Detektor 6.

Eine periodische Veränderung der Wellenlänge und damit eine Wellenlängenmodulation der der Meßprobenzelle 4 zugeführten Strahlung erfolgt infolge einer Taumelbewegung des Interferenzfilters 11, die mit Hilfe eines Antriebsmotors 12 erzeugt wird. Der Antriebsmotor 12 weist eine rotierende Motorwelle 13 auf, was in Fig. 1 durch den Pfeil 14 veranschaulicht ist. Am vorderen Ende 15 ist die Motorwelle 13 abgeschrägt. Die abgeschrägte Stirnfläche 16 dient zur Befestigung des Mittelpunktes des kreisscheibenförmigen Interferenzfilters 11. Der Abschrägungswinkel der Stirnfläche 16 ist in Fig. 1 mit alpha bezeichnet und entspricht dem Kippwinkel des Interferenzfilters 11 gegenüber einer Ebene, auf die die Längsachse der Motorwelle 13 lotrecht steht. Bei einer Rotation des Interferenzfilters 11 taumelt dieses im Strahlengang 3 zwischen der in Fig. 1 dargestellten Stellung mit dem Kippwinkel alpha und einer zweiten Stellung mit dem Kippwinkel -alpha hin und her. Dabei verändert sich der Einfallswinkel gamma in Abhängigkeit von dem Anstellwinkel beta zwischen der Längsachse der Motorwelle 13 und der Längsachse des Lichtstrahlbündels 3.

Der Antriebsmotor 12 ist auf einer in Fig. 1 mit einer unterbrochenen Linie dargestellten Motorhalterung 17 befestigt, die um einen in der Nähe des vorderen Endes 15 der Motorwelle 13 benachbart zum Lichtstrahlenbündel 3 liegenden Drehpunkt 118 verschwenkbar ist. Durch Verschwenken der Motorhalterung 17 kann somit der Bereich eingestellt werden, innerhalb dem sich die Wellenlänge der die Meßprobenzelle 4 durchquerenden Strahlung periodisch verändert.

Bei dem in Fig. 1 dargestellten Ausführungsbeispiel erfolgt statt einer manuellen Verstellung des Anstellwinkels eine Einstellung des Anstellwinkels mit Hilfe eines Verstellmotors 18 und eines Schneckenantriebes 19. Bei einer Drehung des Schneckenantriebs 19 in Richtung des Doppelpfeils 20 verkleinert oder vergrößert sich der Anstellwinkel beta, der vorzugsweise gleich dem Kippwinkel alpha ist. Die automatische Einstellung des die mittlere Wellenlänge bestimmenden Winkels beta erfolgt über Steuerleitungen 21, durch die der Verstellmotor 18 mit der Signalauswerteeinrichtung 10 verbunden ist. Mit Hilfe des Schneckenantriebs 19 und des Verstellmotors 18 kann der Anstellwinkel beta auch kontinuierlich verändert und somit ein gewisser Wellenlängenbereich durchfahren werden.

Über eine Sensorleitung 22 wird am Antriebsmotor 12 ein die Modulationsfrequenz wiedergebendes Signal abgenommen, das über einen Frequenzverdoppler 23 zum Steuereingang des Lock-In-Verstärkers 8 gelangt, so daß dieser auf das Detektorsignal mit der doppelten Frequenz der Modulationsfrequenz abgestimmt ist.

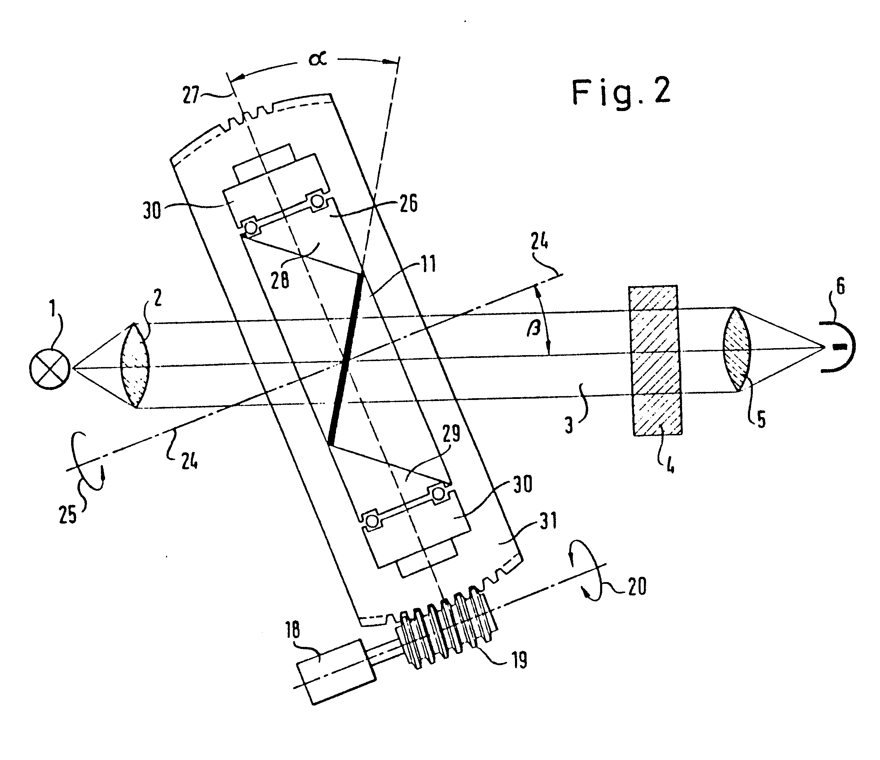

Während bei dem in Fig. 1 dargestellten Ausführungsbeispiel das Lichtstrahlbündel 3 immer nur einen verhältnismäßig kleinen Randbereich des scheibenförmigen Interferenzfilters 11 ausleuchtet, gestattet es das in Fig. 2 dargestellte Ausführungsbeispiel, den größten Teil der Interferenzfilterfläche auszunutzen. Bei dem in Fig. 2 dargestellten Ausführungsbeispiel sind die den Komponenten der Fig. 1 entsprechenden Komponenten mit den gleichen Bezugszeichen versehen.

Das Interferenzfilter 11 ist in einem um die Rotationsachse 24 beispielsweise in Richtung des Pfeiles 25 rotierenden Ring 26 gegenüber der Ringmittelebene 27 um den Winkel alpha gekippt befestigt. Der Ring 26 verfügt über Halteteile 28, 29, mit denen das Interferenzfilter 11 leicht auswechselbar im Ring 26 befestigt ist.

Der Ring 26 ist in einem Gehäuse 30 drehbar gelagert und ist über einen elektromagnetischen Außenläufer-Antrieb oder über einen pneumatischen Antrieb so angetrieben, daß hohe Drehzahlen erreichbar sind. Um einen vibrationsfreien Lauf zu erreichen, ist der rotierende Ring 26 gut ausgewuchtet.

Das Gehäuse 30 ist in einem Rahmen 31 gehalten, über den es gegenüber der Längsrichtung des Lichtstrahlenbündels 3 je nach Bedarf geneigt werden kann. Der diesbezügliche Anstellwinkel beta ist entsprechend Fig. 1 auch in Fig. 2 eingetragen. Wie bei dem in Fig. 1 dargestellten Ausführungsbeispiel kann die Verstellung des Anstellwinkels beta manuell oder mit Hilfe eines Verstellmotors 18 und eines Schneckenantriebs 19 erfolgen.

Bei Bedarf können in einer Analyseneinrichtung auch zwei oder mehrere rotierende Interferenzfilter 11 der beschriebenen Art kombiniert werden.

PATENTANSPRÜCHE

1. Derivativ-Spektrometer zum hochempfindlichen qualitativen und quantitativen spektroskopischen Nachweis von Substanzen mit einer Strahlungsquelle, deren Strahlung über einen Monochromator und Wellenlängenwobbler nach Durchqueren einer Meßprobenzelle auf einen Detektor gelangt, der den Eingang eines auf die doppelte Wobblermodulationsfrequenz abgestimmten Verstärkers speist, dessen Ausgangssignal mit einer Signalauswerteeinrichtung verbunden ist, d a d u r c h g e k e n n z e i c h - n e t , daß der Monochromator und der Wellenlängenwobbler durch ein um eine schräg zum Strahlengang angestellte Rotationsachse (13, 24) rotierendes Interferenzfilter (11) gebildet sind, das gegenüber der Rotationsachse (13, 24) gekippt angeordnet ist und dadurch im Strahlengang (3) eine Taumelbewegung ausführt.

2. Derivativ-Spektrometer nach Anspruch 1, d a - d u r c h g e k e n n z e i c h n e t , daß das Interferenzfilter (11) kreisscheibenförmig ist und mit seinem Mittelpunkt auf der abgeschrägten Stirnfläche (16) der Motorwelle (13) eines Antriebsmotors (12) befestigt ist.

3. Derivativ-Spektrometer nach Anspruch 2, d a - d u r c h g e k e n n z e i c h n e t , daß der Antriebsmotor (12) auf einer um einen in der Nähe des Strahlenganges (3) und der abgeschrägten Stirnfläche (16) liegenden Drehpunkt (118) drehbaren Motorhalterung (17) angeordnet ist.

4. Derivativ-Spektrometer nach Anspruch 3, d a - d u r c h g e k e n n z e i c h n e t , daß der Anstell- winkel (beta) der Motorwelle (13) gegenüber dem Strahlengang (3) durch einen Verstellmotor (18) einstellbar ist, durch den über einen Schneckenantrieb (19) die Drehstellung der Motorhalterung (17) veränderbar ist.

5. Derivativ-Spektrometer nach Anspruch 4, d a - d u r c h g e k e n n z e i c h n e t , daß der Verstell- motor (18) über Steuerleitungen (21) mit einem Steuerausgang der Signalauswerteeinrichtung (10) verbunden ist.

6. Derivativ-Spektrometer nach Anspruch 1, d a - d u r c h g e k e n n z e i c h n e t , daß das Inter- ferenzfilter (11) in einem rotierenden Ring (26) gegenüber dessen Längs- und Rotationsachse geneigt angeordnet ist.

7. Derivativ-Spektrometer nach Anspruch 6, d a - d u r c h g e k e n n z e i c h n e t , daß der Ring (26) den Strahlengang (3) konzentrisch umgibt.

8. Derivativ-Spektrometer nach Anspruch 6 und 7, d a d u r c h g e k e n n z e i c h n e t , daß der Ring (26) in einem Gehäuse (30) angeordnet ist und durch einen elektromagnetischen Außenläuferantrieb in Drehungen versetzbar ist.

9. Derivativ-Spektrometer nach Anspruch 6 oder 7, d a d u r c h g e k e n n z e i c h n e t , daß der Ring (26) in einem Gehäuse (30) angeordnet ist und durch einen pneumatischen Antrieb in Drehungen versetzbar ist.

10. Derivativ-Spektrometer nach einem der Ansprüche 8 oder 9, d a d u r c h  g e k e n n z e i c h n e t , daß der Anstellwinkel (beta) zwischen der Rotationsachse (24) des Ringes (26) und der Längsrichtung des Strahlenganges (3) über einen am Gehäuse (30) angreifenden Schneckenantrieb (19) verstellbar ist.

0202585

Fig.1

# Fig.2